# EUROPEAN PATENT APPLICATION

(11) **EP 4 738 564 A1**
(43) Date of publication of application: **06.05.2026**
(21) Application number: 24210891.8
(22) Date of filing: 05.11.2024
(51) Int. Cl.: H01M 50/209, H01M 50/249, H01M 50/264

(54) **A BATTERY PACK AND A VEHICLE**

(71) Applicant: Volvo Truck Corporation, 405 08 Göteborg (SE)
(72) Inventor: Rout, Dhirendra, 422 54 Göteborg (SE); Irannezhad, Mike, 413 30 Göteborg (SE); Jonsson, Kasper, 417 57 Göteborg (SE)
(74) Representative: Kransell & Wennborg KB

(57) **Abstract**

The disclosure relates to a battery pack (4) comprising a battery pack layer (6), the battery pack layer (6) comprising:
- a base plate (8), comprising a first support surface (10) facing away from the base plate (8) in a first direction (d1) along a third axis (z), and further comprising a second support surface (12) facing away from the base plate (8) in a second direction (d2) which is opposite to the first direction (d1),
- a first battery stack layer (14), arranged on the first support surface (10),
- a second battery stack layer (16), arranged on the second support surface (12),
- a frame arrangement (18), mechanically connected to the base plate (8), and enclosing the first and second battery stack layers (14, 16). The disclosure also relates to a vehicle (2).

## Description

### TECHNICAL FIELD

The disclosure relates generally to energy storage systems. In particular aspects, the disclosure relates to a battery pack and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more separate battery cell stacks, or battery modules. The battery cells may be prismatic battery cells or cylindrical battery cells.

Due to the electrification trend, such as for vehicles, there is an ongoing strive to develop improved technology relating to battery packs, such as to provide cost-effective configurations which are reliable, robust and/or space efficient.

### SUMMARY

According to a first aspect of the disclosure, a battery pack is provided. The battery pack has a first extension along a first axis, a second extension along a second axis, and a third extension along a third axis, wherein the first, second, and third axes are perpendicular. The battery pack comprises a battery pack layer, the battery pack layer comprises:
- a base plate, comprising a first support surface facing away from the base plate in a first direction along the third axis, and further comprising a second support surface facing away from the base plate in a second direction which is opposite to the first direction,
- a first battery stack layer, arranged on the first support surface,
- a second battery stack layer, arranged on the second support surface,
- a frame arrangement, mechanically connected to the base plate, and enclosing the first and second battery stack layers, as seen in a sectional plane which is perpendicular to the third axis,
wherein the first battery stack layer and the second battery stack layer each comprise:
- a plurality of cell stacks, each comprising a plurality of battery cells stacked together, and wherein the frame arrangement comprises:
- a pair of side walls extending along the first axis, wherein the plurality of cell stacks are located between the pair of side walls along the second axis,
- a pair of end members, extending along the second axis, and mechanically connecting the pair of side walls, and wherein the plurality of cell stacks are located between the pair of end members. The first aspect of the disclosure may seek to provide a cost-effective battery pack configuration which is reliable, robust and/or space efficient. A technical benefit may include that a space efficient and robust packaging of battery cells is achieved along the third axis by arranging the battery cells on opposite sides of the base plate while also protecting the battery cells by the enclosing frame arrangement. The frame arrangement may be configured to provide structural support for the battery cells along the second axis and/or the first axis. Additionally, or alternatively, the frame arrangement may be used for stacking a plurality of battery layers on top of each other along the third axis. Hence, by the battery pack configuration as disclosed herein, a flexible and modular configuration may be achieved.

Optionally in some examples, including in at least one preferred example, the plurality of battery cells of the respective battery cell stack are stacked along the second axis, and the plurality of cell stacks are arranged along the first axis. A technical benefit may include that any swelling forces from the respective battery cell stack may be accommodated by the same structural component(s) for each battery cell stack, i.e. by the pair of side walls. This may imply a more rigid battery pack configuration, e.g., allowing the battery pack to be longer along the first axis without negatively affecting the rigidity of the battery pack too much.

Optionally in some examples, including in at least one preferred example, the battery cells may comprise prismatic battery cells. Additionally, or alternatively, the battery cells may comprise cylindrical battery cells. The prismatic battery cell may comprise a top surface, a bottom surface and four intermediate side surfaces connecting the top surface and the bottom surface. The prismatic battery cell may be box shaped. The use of prismatic battery cells stacked in battery cell stacks may result in a battery pack configuration with high energy density.

Optionally in some examples, including in at least one preferred example, the pair of side walls are welded to the base plate. A technical benefit may include a robust and cost-effective configuration.

Optionally in some examples, including in at least one preferred example, the battery pack layer further comprises a crossbeam member extending along the second axis and mechanically connecting the pair of side walls, and wherein the crossbeam member is located between adjacent cell stacks. A technical benefit may include a further robust battery pack configuration. For example, the crossbeam member may result in improved crash protection of the battery pack.

Optionally in some examples, including in at least one preferred example, the crossbeam member is welded to the pair of side walls. A technical benefit may include a robust and cost-effective configuration.

Optionally in some examples, including in at least one preferred example, the crossbeam member is attached to the base plate via at least one first fastener. A technical benefit may include a robust and cost-effective configuration.

Optionally in some examples, including in at least one preferred example, the crossbeam member is arranged on one of the first support surface and the second support surface, wherein the battery pack is configured such that the at least one first fastener attaching the crossbeam member to the base plate has been inserted from the other one of the first support surface and the second support surface. A technical benefit may include an efficient and reliable attachment of the crossbeam member to the base plate

Optionally in some examples, including in at least one preferred example, the battery pack layer comprises a clamping member configured to clamp at least one of the battery cells, wherein the clamping member is mechanically connected to the frame arrangement the at least one battery cell is enclosed by, and/or mechanically connected to the base plate the at least one battery cell is arranged on, such that the clamping member applies a clamping force through the at least one battery cell towards the base plate the at least one battery cell is arranged on. A technical benefit may include that a robust attachment of the battery cells is achieved in the battery pack layer, e.g., mitigating the risk of the battery cells or the battery cell stacks moving during use, such as preventing battery cell vibrations during use.

Optionally in some examples, including in at least one preferred example, the clamping member is configured to clamp at least one of the battery cells located in at least one of the adjacent cell stacks the crossbeam member is located between, and wherein the clamping member is mechanically connected to the crossbeam member, such as via a second fastener. A technical benefit may include an improved attachment of the clamping member, e.g. allowing the attachment to not only be provided at or proximate any of the side walls of the frame arrangement. In some examples, the clamping member is integrated with the crossbeam member, i.e., the crossbeam member and the clamping member may be provided in one single piece.

Optionally in some examples, including in at least one preferred example, the clamping member extends along the first axis such that the clamping member and the crossbeam member form a T-shape, as seen in a sectional plane which is perpendicular to the second axis, wherein at least one of the battery cells in each of the adjacent cell stacks the crossbeam member is located between are clamped by the clamping member. A technical benefit may include that battery cells in the two adjacent battery cell stacks are clamped by the same clamping member. This may imply a more cost-effective and space-effective configuration.

Optionally in some examples, including in at least one preferred example, the base plate is a cooling plate comprising at least one coolant conduit for coolant. A technical benefit may include that the first and second battery stack layers may be cooled by the same cooling plate. This may result in improved cooling, more effective cooling, and/or cooling requiring fewer cooling elements for the battery cells.

Optionally in some examples, including in at least one preferred example, the cooling plate comprises a coolant inlet and a coolant outlet fluidly connected to the at least one coolant conduit. In some examples, the coolant inlet and/or outlet are provided at at least one of the pair of end members, such as on one end side of the battery pack.

Optionally in some examples, including in at least one preferred example, the battery cells comprise a pair of electrical terminals located on a top surface of the battery cell facing in a direction along the third axis away from the base plate the battery cells are arranged on. A technical benefit may include that a narrower packaging of the battery cells is allowed at the side walls, e.g., no cabling etc. is required in an interface between the battery cells and the side walls. This may result in a more rigid and robust packaging of the battery cells inside the frame arrangement.

Optionally in some examples, including in at least one preferred example, the battery pack comprises at least two of the battery layers stacked on top of each other along the third axis. A technical benefit may include that a space efficient packaging of a plurality of battery cells is achieved along the third axis.

Optionally in some examples, including in at least one preferred example, the at least two of the battery layers stacked on top of each other along the third axis are mechanically connected to one another via the frame arrangements. A technical benefit may include that a robust and rigid stacking of battery layers are achieved along the third axis. In some examples, the at least two of the battery layers stacked on top of each other along the third axis are mechanically connected to one another via the pair of side walls. A technical benefit may include that the pair of side walls may not only be arranged to accommodate swelling forces from the respective battery cell stack, but also arranged to act as stacking blocks for stacking the battery layers along the third axis.

Optionally in some examples, including in at least one preferred example, at least two adjacently stacked battery layers of the at least two battery layers stacked on top of each other along the third axis are mechanically connected to each other by one or more third fasteners. A technical benefit may include that a rigid and robust connection is achieved in a cost-effective manner, e.g., allowing battery layers to be added and removed without damaging any elements of the battery pack. In some examples, the frame arrangements of the at least two of the battery layers stacked on top of each may together at least partly form an outer cover of the battery pack which is sealed from an external environment. A technical benefit may include that an improved cell to pack configuration is achieved.

Optionally in some examples, including in at least one preferred example, at least one third fastener of the one or more third fasteners is provided in complementary holes of the frame arrangements of the at least two adjacently stacked battery layers, wherein one of the complementary holes in one of the frame arrangements has a fastener opening which is accessible from a side face of the frame arrangement which is directed away from the frame arrangement in a direction along the first axis or in a direction along the second axis. A technical benefit may include facilitated manufacturing of the battery pack. A technical benefit may additionally or alternatively include that a more space-efficient frame arrangement is achieved.

Optionally in some examples, including in at least one preferred example, the fastener opening is provided in a recess on the side face. A technical benefit may include facilitated manufacturing of the battery pack. A technical benefit may additionally or alternatively include that a more space-efficient frame arrangement is achieved.

Optionally in some examples, including in at least one preferred example, the battery pack comprises a pair of covers, wherein each one of the pair of covers is fixed to one of the frame arrangements such that the plurality of battery layers are located between the pair of covers along the third axis, and each of the plurality of cell stacks are enclosed by the frame arrangements and the pair of covers. A technical benefit may include that a closed battery pack structure is achieved.

Optionally in some examples, including in at least one preferred example, the battery pack comprises a pair of outer gaskets, wherein each one of the pair of outer gaskets is located between one of the pair of covers and one of the frame arrangement that the cover is fixed to, and wherein each of the pair of outer gaskets is configured to seal between the cover and the frame arrangement. A technical benefit may include that a sealed and closed battery pack structure is achieved.

Optionally in some examples, including in at least one preferred example, the battery pack comprises an intermediate gasket, wherein the intermediate gasket is located between the frame arrangements of adjacent battery layers, and wherein the intermediate gasket is configured to seal between the frame arrangements. A technical benefit may include that a sealed and closed battery pack structure is achieved.

According to a second aspect of the disclosure, a vehicle comprising the battery pack according to any one of the examples of the first aspect of the disclosure is provided. Advantages and benefits of the second aspect of the disclosure are analogous to the advantages and benefits of the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
FIG. 1 is an exemplary vehicle in a side view according to an example.
FIG. 2a is an exemplary battery pack in a top view according to an example.
FIG. 2b is an exemplary battery pack in a side view according to an example.
FIG. 2c is an exemplary battery pack in a front view according to an example.
FIG. 2d is an exemplary battery pack in a perspective view according to an example.
FIG. 3a is an exemplary battery pack in a side view according to an example.
FIG. 3b is an exemplary battery pack in a front view according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide a battery pack which is robust, reliable, cost-effective and/or space efficient. Additionally, an aim of the present disclosure is to provide an improved battery pack and/or vehicle, which at least partly alleviate one or more drawbacks of the prior art, or which at least are suitable alternatives. For example, by providing a battery pack configuration as disclosed herein, a space efficient and robust packaging of battery cells is achieved by arranging the battery cells on opposite sides of the base plate while also protecting the battery cells by the enclosing frame arrangement. The frame arrangement is preferably configured to provide structural support for the battery cells along the second axis and/or the first axis. Additionally, or alternatively, the frame arrangement may be used for stacking a plurality of battery layers on top of each other along the third axis. Hence, by the battery pack configuration as disclosed herein, a flexible and modular configuration may be achieved. As another example, more efficient cooling of the battery cells may be achieved by the battery pack configuration as disclosed herein.

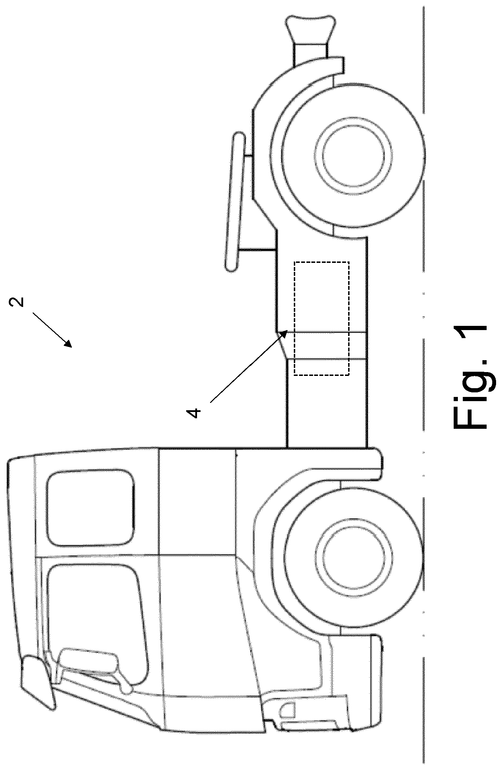

**FIG. 1** is an exemplary vehicle 2 in a side view according to an example. The vehicle 2 is in this example a truck, and more particularly a towing truck for towing one or more trailers (not shown). It shall however be noted that the vehicle may be any other type of vehicle, such as another type of truck, a bus, a passenger car, a marine vessel, or construction equipment, such as a wheel loader or an excavator. The vehicle 2 comprises a battery pack 4 according to an example disclosed herein. The battery pack 4 may at least partly be used for driving one or more electric motors (not shown) of the vehicle 2. The vehicle 2 may accordingly be an electric vehicle or a hybrid vehicle, i.e., a vehicle which at least partly uses electric power for propulsion. The battery pack 4 as disclosed herein may also be used in a stationary unit, such as a building and/or any stationary machinery.

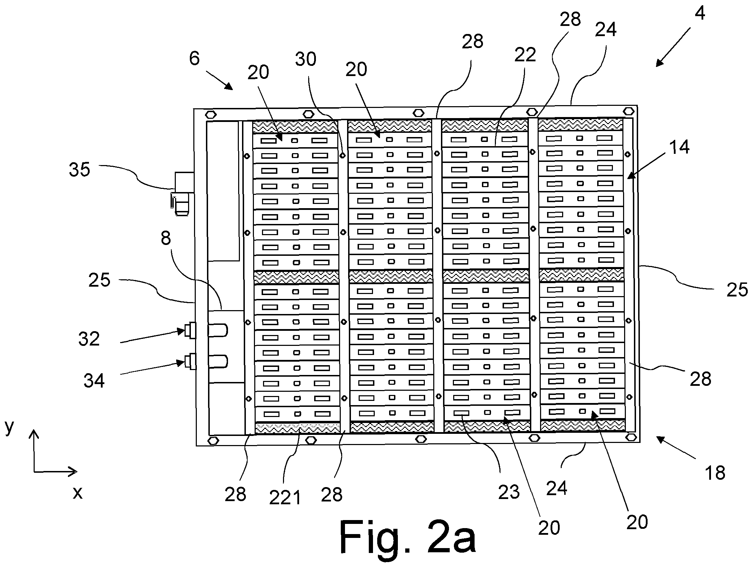

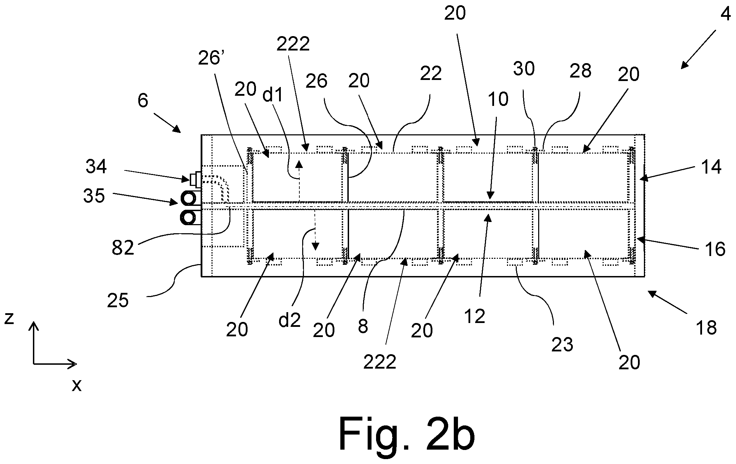

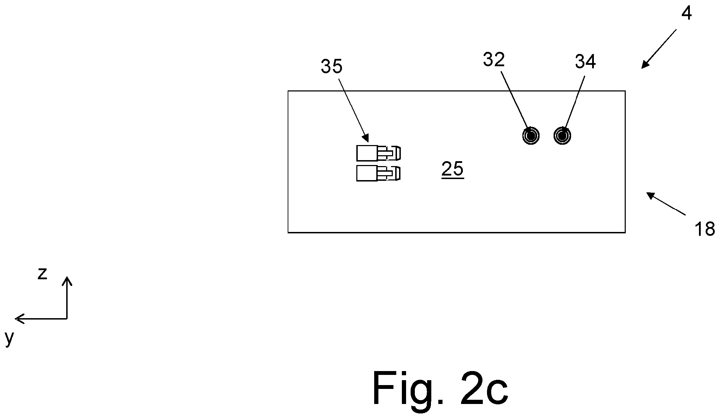

**FIG. 2a** is an exemplary battery pack 4 in a top view according to an example. The battery pack 4 in FIG. 2a may for example be used in the vehicle 2 shown in FIG. 1. **FIG. 2b** is the battery pack 4 in FIG. 2a shown in a side view, and **FIG. 2c** is the battery pack 4 shown in a front view. In FIG. 2b, an interior of the battery pack 4 is at least partly depicted.

With reference to e.g. FIGS. 2a-c, the battery pack 4 has a first extension along a first axis x, a second extension along a second axis y, and a third extension along a third axis z. The first, second, and third axes x, y, z are perpendicular. By way of example, the first axis x may correspond to a longitudinal axis, the second axis y may correspond to a width axis and the third axis z may correspond to a height axis. The axes x, y, z may correspond to a Cartesian coordinate system. In some examples, the height axis z may correspond to a height axis of the vehicle 2 when the battery pack 4 is provided in the vehicle 2. The height axis z may in some examples be denoted a vertical axis. However, it shall be noted that the battery pack 4 may also be oriented differently in the vehicle 2, or in any other stationary unit.

The battery pack 4 comprises a battery pack layer 6.

The battery pack layer 6 comprises a base plate 8. The base plate 8 comprises a first support surface 10 facing away from the base plate 8 in a first direction d1 along the third axis z. The base plate 8 further comprises a second support surface 12 facing away from the base plate 8 in a second direction d2 which is opposite to the first direction d1.

The battery pack layer 6 further comprises a first battery stack layer 14, arranged on the first support surface 10, and a second battery stack layer 16, arranged on the second support surface 12.

The battery pack layer 6 further comprises a frame arrangement 18. The frame arrangement 18 is mechanically connected to the base plate 8, and encloses the first and second battery stack layers 14, 16, as seen in a sectional plane which is perpendicular to the third axis z.

The first battery stack layer 14 comprises a plurality of cell stacks 20, each comprising a plurality of battery cells 22 stacked together.

The second battery stack layer 16 also comprises a plurality of cell stacks 20, each comprising a plurality of battery cells 22 stacked together.

The frame arrangement 18 comprises a pair of side walls 24 extending along the first axis x, wherein the plurality of cell stacks 20 are located between the pair of side walls 24 along the second axis y.

The frame arrangement 18 further comprises a pair of end members 25, extending along the second axis y, and mechanically connecting the pair of side walls 24, and wherein the plurality of cell stacks 20 are located between the pair of end members 25.

In the example shown in FIGS. 2a-c, the battery cells 22 are prismatic battery cells.

The plurality of battery cells 22, e.g. the prismatic battery cells 22, of the respective battery cell stack 20 may as shown be stacked along the second axis y, and the plurality of battery cell stacks 20 may be arranged along the first axis x.

The respective battery cell stack 20 may further comprise at least one spacer 221. The spacer 221 may be configured to accommodate swelling expansions of the battery cells 22 in the battery cell stack 20. A spacer may be provided at an end of the battery cell stack 20, proximate any of the side walls 24, and/or a spacer may be provided in-between two adjacent battery cells 22 in the battery cell stack 20.

By way of example, the pair of side walls 24 may be welded to the base plate 8.

The battery pack layer 6 may as further shown comprise a crossbeam member 26 extending along the second axis y and mechanically connecting the pair of side walls 24, and wherein the crossbeam member 26 is located between adjacent cell stacks 20. In the shown example, there are three crossbeam members 26 located between adjacent cell stacks 20. It shall however be noted that any number of crossbeam members 26 may be provided, and even in some examples there may not be any crossbeam member. As shown in e.g. FIG. 2b, the battery pack layer 6 may further comprise at least one outer crossbeam member 26' located at an outer end of the plurality of battery cell stacks 20, as seen along the x-axis.

By way of example, the crossbeam member(s) 26 may be welded to the pair of side walls 24, thereby improving the structural rigidity of the frame arrangement 18.

The battery pack layer 6 may further comprise a clamping member 28 which is configured to clamp at least one of the battery cells 22. In the shown example, there are five clamping members 28. It shall however be noted that more or fewer clamping members as disclosed herein may be used, and even in some examples there may not be any clamping member. The clamping member 28 is mechanically connected to the frame arrangement 18 the at least one battery cell 22 is enclosed by, and/or the clamping member 28 is mechanically connected to the base plate 8 the at least one battery cell 22 is arranged on, such that the clamping member 28 applies a clamping force through the at least one battery cell 22 towards the base plate 8 the at least one battery cell 22 is arranged on.

The clamping member 28 may as shown be configured to clamp at least one of the battery cells 22 located in at least one of the adjacent battery cell stacks 20 the crossbeam member 26 is located between, and the clamping member 28 may be mechanically connected to the crossbeam member 26, such as shown via a second fastener 30.

Additionally, or alternatively, the clamping member 28 may be mechanically connected to the pair of side walls 24, such as by a fastener and/or weld.

As shown , the clamping member 28 preferably extends along the second axis y between the pair of side walls 24 such that the clamping member 28 clamps each one of the battery cells 22 in the battery cell stack 20.

The clamping member 28 may, additionally or alternatively, and as shown in e.g. FIG. 2b, extend along the first axis x such that the clamping member 28 and the crossbeam member 26 form a T-shape, as seen in a sectional plane which is perpendicular to the second axis y, wherein at least one of the battery cells 22 in each of the adjacent battery cell stacks 20 the crossbeam member 26 is located between are clamped by the clamping member 28.

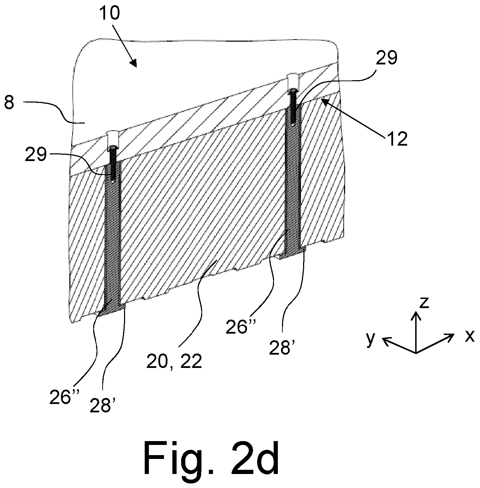

**FIG. 2d** shows a portion of a battery pack 4 in a perspective view according to an example, comprising a crossbeam member 26" which extends along the second axis y and mechanically connects the pair of side walls 24 (not show). The crossbeam member 26" is located between adjacent cell stacks 20. As shown, the crossbeam member 26" may be attached to the base plate 8 via at least one first fastener 29. As further shown, the crossbeam member 26" may be arranged on one of the first support surface 10 and the second support surface 12. In the shown example, the crossbeam member 26" is arranged on the second support surface 12. The battery pack 4 may be configured such that the at least one first fastener 29 attaching the crossbeam member 26" to the base plate 8 has been inserted from the other one of the first support surface 10 and the second support surface 12, i.e., in this example from the first support surface 10.

As further indicated in FIG 2e, a clamping member 28' as disclosed herein may be integrated with the crossbeam member 26", i.e., the crossbeam member 26" and the clamping member 28' may be provided in one single piece.

With reference to FIG. 2b, the base plate 8 may be a cooling plate 8 comprising at least one coolant conduit 82 for coolant. The cooling plate 8 may comprise a coolant inlet 32 and a coolant outlet 34 fluidly connected to the at least one coolant conduit 82. The coolant inlet 32 and the coolant outlet 34 may as shown in FIG. 2c be located on one of the pair of end members 25. An electrical connection 35 for electrically connecting the battery cells 22 to a load (not shown) may also be provided on one of the pair of end members 25, such as on a front side of the battery pack 4.

As further shown in e.g. FIG 2b, the battery cells 22 preferably comprises a pair of electrical terminals 23 located on a top surface 222 of the battery cell 22 facing in a direction along the third axis z away from the base plate 8 the battery cells 22 are arranged on.

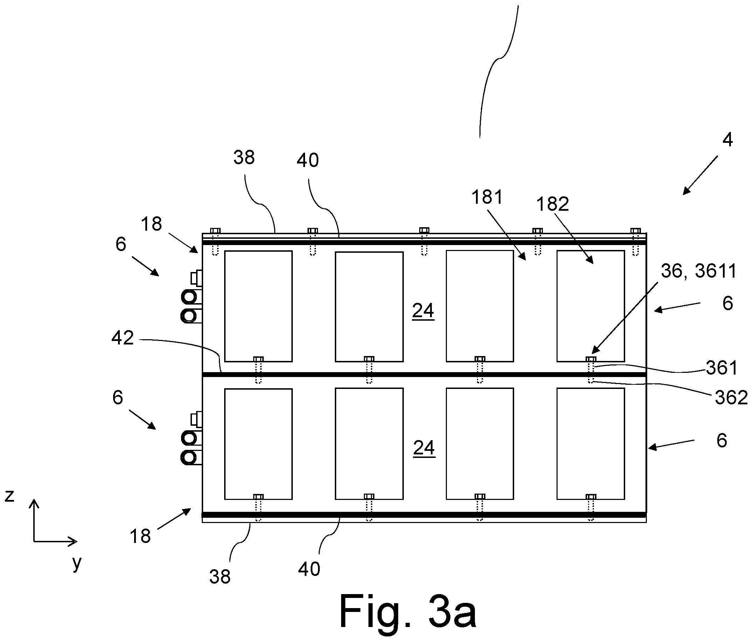

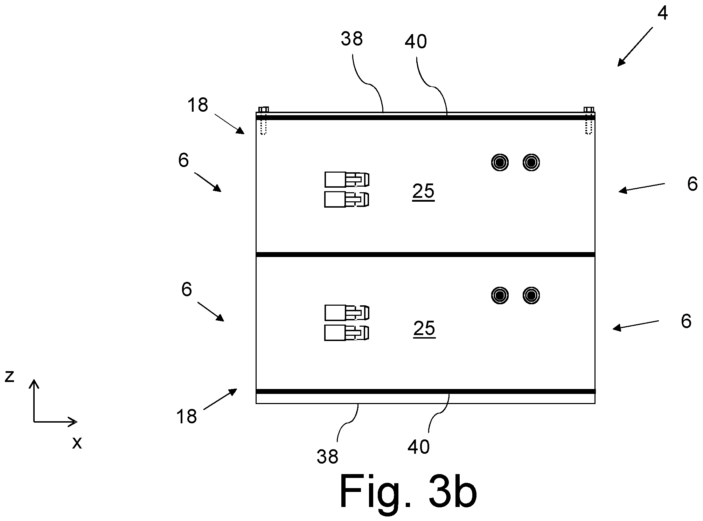

**FIG. 3a** is an exemplary battery pack 4 in a side view according to an example. **Fig. 3b** is the battery pack 4 in FIG. 3a in a front view.

As shown, the battery pack 4 may comprise at least two of the battery layers 6 according to examples disclosed herein stacked on top of each other along the third axis z.

The at least two of the battery layers 6 stacked on top of each other along the third axis z are preferably mechanically connected to one another via the frame arrangements 18.

As shown, at least two adjacently stacked battery layers 6 of the at least two battery layers 6 stacked on top of each other along the third axis z may be mechanically connected to each other by one or more third fasteners 36.

A fastener as disclosed herein may be any type of fastener, such as a screw, a bolt, a rivet, or the like.

At least one third fastener 36 of the one or more third fasteners 36 may be provided in complementary holes 361, 362 of the frame arrangements 18 of the at least two adjacently stacked battery layers 6. One of the complementary holes 361 in one of the frame arrangements may have a fastener opening 3611 which is accessible from a side face 181 of the frame arrangement 18 which is directed away from the frame arrangement 18 in a direction along the first axis x (as shown in FIG. 3a) or in a direction along the second axis y.

The fastener opening 3611 may as shown be provided in a recess 182 on the side face 181.

The battery pack 4 may comprise a pair of covers 38, wherein each one of the pair of covers 38 is fixed to one of the frame arrangements 18 such that the plurality of battery layers 6 are located between the pair of covers 38 along the third axis z, and each of the plurality of cell stacks 20 are enclosed by the frame arrangements 18 and the pair of covers 38.

The battery pack 4 may additionally or alternatively comprise a pair of outer gaskets 40, wherein each one of the pair of outer gaskets 40 is located between one of the pair of covers 38 and one of the frame arrangement 18 that the cover 38 is fixed to, and wherein each of the pair of outer gaskets 40 is configured to seal between the cover 38 and the frame arrangement 18.

In some examples, the frame arrangements 18 of the at least two of the battery layers 6 stacked on top of each may together at least partly form an outer cover of the battery pack 4 which is sealed from an external environment. By way of example, the battery pack 4 may comprise an intermediate gasket 42, wherein the intermediate gasket 42 is located between the frame arrangements 18 of adjacent battery layers 6, and wherein the intermediate gasket 42 is configured to seal between the frame arrangements 18.

In the following, features and possible feature combinations of the present disclosure are presented as a list of Examples.

Example 1: A battery pack (4), having a first extension along a first axis (x), a second extension along a second axis (y), and a third extension along a third axis (z), wherein the first, second, and third axes (x,y,z) are perpendicular, the battery pack (4) comprising a battery pack layer (6), the battery pack layer (6) comprising:
- a base plate (8), comprising a first support surface (10) facing away from the base plate (8) in a first direction (d1) along the third axis (z), and further comprising a second support surface (12) facing away from the base plate (8) in a second direction (d2) which is opposite to the first direction (d1),
- a first battery stack layer (14), arranged on the first support surface (10),
- a second battery stack layer (16), arranged on the second support surface (12),
- a frame arrangement (18), mechanically connected to the base plate (8), and enclosing the first and second battery stack layers (14, 16), as seen in a sectional plane which is perpendicular to the third axis (z),

wherein the first battery stack layer (14) and the second battery stack layer (16) each comprise:
   - a plurality of cell stacks (20), each comprising a plurality of battery cells (22) stacked together,
and wherein the frame arrangement (18) comprises:
   - a pair of side walls (24) extending along the first axis (x), wherein the plurality of cell stacks (20) are located between the pair of side walls (24) along the second axis (y),
   - a pair of end members (25), extending along the second axis (y), and mechanically connecting the pair of side walls (24), and wherein the plurality of cell stacks (20) are located between the pair of end members (25).

Example 2: The battery pack (4) of Example 1, wherein the plurality of battery cells (22) of the respective battery cell stack are stacked along the second axis (y), and wherein the plurality of cell stacks (20) are arranged along the first axis (x).

Example 3: The battery pack (4) of any of the preceding Examples, wherein the pair of side walls (24) are welded to the base plate (8).

Example 4: The battery pack (4) of any of the preceding Examples, wherein the battery pack layer further comprises a crossbeam member (26) extending along the second axis (y) and mechanically connecting the pair of side walls (24), and wherein the crossbeam member (26) is located between adjacent cell stacks (20).

Example 5: The battery pack (4) of Example 4, wherein the crossbeam member (26) is welded to the pair of side walls (24).

Example 6: The battery pack (4) of any one of Examples 4-5, wherein the crossbeam member (26") is attached to the base plate (8) via at least one first fastener (29).

Example 7: The battery pack (4) of Example 6, wherein the crossbeam member (26") is arranged on one of the first support surface (10) and the second support surface (12), wherein the battery pack (4) is configured such that the at least one first fastener (29) attaching the crossbeam member (26") to the base plate (8) has been inserted from the other one of the first support surface (10) and the second support surface (12).

Example 8: The battery pack (4) of any of the preceding Examples, wherein the battery pack layer comprises a clamping member (28) configured to clamp at least one of the battery cells (22), wherein the clamping member (28) is mechanically connected to the frame arrangement (18) the at least one battery cell (22) is enclosed by, and/or mechanically connected to the base plate (8) the at least one battery cell (22) is arranged on, such that the clamping member (28) applies a clamping force through the at least one battery cell (22) towards the base plate (8) the at least one battery cell (22) is arranged on.

Example 9: The battery pack (4) of Example 8, when also being dependent on any one of Examples 4-7, wherein the clamping member (28) is configured to clamp at least one of the battery cells (22) located in at least one of the adjacent cell stacks (20) the crossbeam member (26) is located between, and wherein the clamping member (28) is mechanically connected to the crossbeam member (26), such as via a second fastener (30).

Example 10: The battery pack (4) of Example 9, wherein the clamping member (28) extends along the first axis (x) such that the clamping member (28) and the crossbeam member (26) form a T-shape, as seen in a sectional plane which is perpendicular to the second axis (y), wherein at least one of the battery cells (22) in each of the adjacent cell stacks (20) the crossbeam member (26) is located between are clamped by the clamping member (28).

Example 11: The battery pack (4) of any of the preceding Examples, wherein the base plate (8) is a cooling plate (8) comprising at least one coolant conduit (82) for coolant.

Example 12: The battery pack (4) of Example 11, wherein the cooling plate (8) comprises a coolant inlet (32) and a coolant outlet (34) fluidly connected to the at least one coolant conduit (82).

Example 13: The battery pack (4) of any of the preceding Examples, wherein the battery cells (22) comprise a pair of electrical terminals (23) located on a top surface of the battery cell (22) facing in a direction along the third axis (z) away from the base plate (8) the battery cells (22) are arranged on.

Example 14: The battery pack (4) of any of the preceding Examples, comprising at least two of the battery layers (6) stacked on top of each other along the third axis (z).

Example 15: The battery pack (4) of Example 14, wherein the at least two of the battery layers (6) stacked on top of each other along the third axis (z) are mechanically connected to one another via the frame arrangements (18).

Example 16: The battery pack (4) of Example 15, wherein at least two adjacently stacked battery layers (6) of the at least two battery layers (6) stacked on top of each other along the third axis (z) are mechanically connected to each other by one or more third fasteners (36).

Example 17: The battery pack according to Example 16, wherein at least one third fastener (36) of the one or more third fasteners (36) is provided in complementary holes (361, 362) of the frame arrangements (18) of the at least two adjacently stacked battery layers (6), wherein one of the complementary holes (361) in one of the frame arrangements has a fastener opening (3611) which is accessible from a side face (181) of the frame arrangement (18) which is directed away from the frame arrangement (18) in a direction along the first axis (x) or in a direction along the second axis (y).

Example 18: The battery pack according to Example 17, wherein the fastener opening (3611) is provided in a recess (182) on the side face (181).

Example 19: The battery pack (4) of any of Examples 12-18, comprising a pair of covers (38), wherein each one of the pair of covers (38) is fixed to one of the frame arrangements (18) such that the plurality of battery layers (6) are located between the pair of covers (38) along the third axis (z), and each of the plurality of cell stacks (20) are enclosed by the frame arrangements (18) and the pair of covers (38).

Example 20: The battery pack (4) of Example 19, comprising a pair of outer gaskets (40), wherein each one of the pair of outer gaskets (40) is located between one of the pair of covers (38) and one of the frame arrangement (18) that the cover (38) is fixed to, and wherein each of the pair of outer gaskets (40) is configured to seal between the cover (38) and the frame arrangement (18).

Example 21: The battery pack (4) of any of Examples 12-20, comprising an intermediate gasket (42), wherein the intermediate gasket (42) is located between the frame arrangements (18) of adjacent battery layers (6), and wherein the intermediate gasket (42) is configured to seal between the frame arrangements (18).

Example 22: A vehicle comprising the battery pack (4) according to any of Examples 1-21.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery pack (4), having a first extension along a first axis (x), a second extension along a second axis (y), and a third extension along a third axis (z), wherein the first, second, and third axes (x,y,z) are perpendicular, the battery pack (4) comprising a battery pack layer (6), the battery pack layer (6) comprising:
- a base plate (8), comprising a first support surface (10) facing away from the base plate (8) in a first direction (d1) along the third axis (z), and further comprising a second support surface (12) facing away from the base plate (8) in a second direction (d2) which is opposite to the first direction (d1),
- a first battery stack layer (14), arranged on the first support surface (10),
- a second battery stack layer (16), arranged on the second support surface (12),
- a frame arrangement (18), mechanically connected to the base plate (8), and enclosing the first and second battery stack layers (14, 16), as seen in a sectional plane which is perpendicular to the third axis (z),
wherein the first battery stack layer (14) and the second battery stack layer (16) each comprise:
- a plurality of cell stacks (20), each comprising a plurality of battery cells (22) stacked together,
and wherein the frame arrangement (18) comprises:
- a pair of side walls (24) extending along the first axis (x), wherein the plurality of cell stacks (20) are located between the pair of side walls (24) along the second axis (y),
- a pair of end members (25), extending along the second axis (y), and mechanically connecting the pair of side walls (24), and wherein the plurality of cell stacks (20) are located between the pair of end members (25).

2. The battery pack (4) of claim 1, wherein the plurality of battery cells (22) of the respective battery cell stack are stacked along the second axis (y), and wherein the plurality of cell stacks (20) are arranged along the first axis (x).

3. The battery pack (4) of any of the preceding claims, wherein the battery pack layer further comprises a crossbeam member (26) extending along the second axis (y) and mechanically connecting the pair of side walls (24), and wherein the crossbeam member (26) is located between adjacent cell stacks (20).

4. The battery pack (4) of claim 3, wherein the crossbeam member (26") is attached to the base plate (8) via at least one first fastener (29).

5. The battery pack (4) of claim 4, wherein the crossbeam member (26") is arranged on one of the first support surface (10) and the second support surface (12), wherein the battery pack (4) is configured such that the at least one first fastener (29) attaching the crossbeam member (26") to the base plate (8) has been inserted from the other one of the first support surface (10) and the second support surface (12).

6. The battery pack (4) of any of the preceding claims, wherein the battery pack layer comprises a clamping member (28) configured to clamp at least one of the battery cells (22), wherein the clamping member (28) is mechanically connected to the frame arrangement (18) the at least one battery cell (22) is enclosed by, and/or mechanically connected to the base plate (8) the at least one battery cell (22) is arranged on, such that the clamping member (28) applies a clamping force through the at least one battery cell (22) towards the base plate (8) the at least one battery cell (22) is arranged on.

7. The battery pack (4) of claim 6, when also being dependent on any one of claims 3-5, wherein the clamping member (28) is configured to clamp at least one of the battery cells (22) located in at least one of the adjacent cell stacks (20) the crossbeam member (26) is located between, and wherein the clamping member (28) is mechanically connected to the crossbeam member (26), such as via a second fastener (30).

8. The battery pack (4) of claim 7, wherein the clamping member (28) extends along the first axis (x) such that the clamping member (28) and the crossbeam member (26) form a T-shape, as seen in a sectional plane which is perpendicular to the second axis (y), wherein at least one of the battery cells (22) in each of the adjacent cell stacks (20) the crossbeam member (26) is located between are clamped by the clamping member (28).

9. The battery pack (4) of any of the preceding claims, wherein the base plate (8) is a cooling plate (8) comprising at least one coolant conduit (82) for coolant.

10. The battery pack (4) of any of the preceding claims, comprising at least two of the battery layers (6) stacked on top of each other along the third axis (z).

11. The battery pack (4) of claim 10, wherein the at least two of the battery layers (6) stacked on top of each other along the third axis (z) are mechanically connected to one another via the frame arrangements (18).

12. The battery pack (4) of claim 11, wherein at least two adjacently stacked battery layers (6) of the at least two battery layers (6) stacked on top of each other along the third axis (z) are mechanically connected to each other by one or more third fasteners (36).

13. The battery pack according to claim 12, wherein at least one third fastener (36) of the one or more third fasteners (36) is provided in complementary holes (361, 362) of the frame arrangements (18) of the at least two adjacently stacked battery layers (6), wherein one of the complementary holes (361) in one of the frame arrangements has a fastener opening (3611) which is accessible from a side face (181) of the frame arrangement (18) which is directed away from the frame arrangement (18) in a direction along the first axis (x) or in a direction along the second axis (y).

14. The battery pack according to claim 13, wherein the fastener opening (3611) is provided in a recess (182) on the side face (181).

15. A vehicle comprising the battery pack (4) according to any of claims 1-14.
